# EUROPEAN PATENT APPLICATION

(11) **EP 4 672 382 A1**
(43) Date of publication of application: **31.12.2025**
(21) Application number: 24184096.6
(22) Date of filing: 24.06.2024
(51) Int. Cl.: H01M 4/66, H01M 4/80, H01M 10/04, H01M 10/052, H01M 10/0562, H01M 50/109, H01M 50/119, H01M 50/153, H01M 50/533

(54) **ALL-SOLID BATTERY COMPRISING THROUGH HOLE**

(71) Applicant: Belenos Clean Power Holding AG, 2502 Bienne (CH)
(72) Inventor: PITTELOUD, Cédric, 2800 Delémont (CH); HORE, Sarmimala, 9467 Fruemsen (CH)
(74) Representative: ICB SA

(57) **Abstract**

The present invention relates to an all-solid battery comprising: a casing comprising a tubular body comprising a first through hole, an outer tubular surface and an inner tubular surface defining an internal volume of the tubular body, first and planar case portions each comprising a through hole arranged to match the first through hole of the tubular body; a first and second metallic conductors comprising a hollow tubular body and provided coaxially within the internal volume of the tubular body of the casing and provided adjacent to the outer tubular surface and the inner tubular surface of the tubular body of the casing, respectively; a first cell unit comprising a first cathode current collector, a first cathode adjacent to the cathode current collector, a first solid state electrolyte (SSE) adjacent to the first cathode, optionally a first anode adjacent to the first SSE, and a first anode current collector adjacent to the first anode, wherein each component of the first cell unit comprises a hollow tubular body and is provided coaxially within the internal volume of the tubular body of the casing.

## Description

### Technical field of the invention

The present invention relates to all-solid batteries, i.e. solid state batteries, comprising a through hole.

### Background

Traditional cylindrically shaped batteries have their negative terminal formed on one circular end while their positive terminal is formed on the other circular end. However, this configuration limits the contact area presented on the circular ends, and heat generated in high power applications due to the battery contact resistance cannot be dissipated efficiently enough, leading to safety issues and a risk of failure of the battery.

Alternative set-ups have been investigated in order to provide an alternative cylindrically shaped battery for high power applications.

US 4,262,064 discloses a toroidal-shaped cell having a wound core of a stack of an anode and a cathode, separated by an insulator. The wound core is provided in a casing comprising two case halves which are kept separated by using a nylon insulator. A liquid electrolyte is provided in the wound core. The wound core and the casing have a through opening, allowing for air or another gas to pass, thereby cooling the battery. The toroidal cells can be stacked by using connectors.

However, this toroidal battery has a complex configuration: the wound core is still complex and requires the use of insulators to avoid short-circuiting between the anode and the cathode, and insulators are also required to avoid contact between case halves. The use of a liquid electrolyte further implies safety issues, related to the possible leakage of the electrolyte.

### Summary of the invention

It is an aim of the present invention to overcome one or more of the foregoing drawbacks. It is an aim of the present invention to provide an all-solid battery which has significantly reduced safety issues compared to batteries comprising a liquid electrolyte.

It is a further aim to provide a battery which has a less complex set-up, and therefore is easier to make, and is less expensive.

Yet another aim is to provide an all-solid battery which is suited for use in high power applications.

According to an aspect of the present disclosure, there is provided an all-solid battery as set out in the appended claims.

The terms "all-solid battery", "solid state battery" and "SSB" are used interchangeably in the present disclosure, and refer to a battery having only solid components: the anode, the cathode and the electrolyte are solid. In other words, the SSB of the present disclosure comprises a solid state electrolyte (SSE).

The all-solid battery comprises a casing, first and second metallic conductors and a first cell unit.

The casing comprises a tubular body and first and second planar case portions.

The tubular body comprises a proximal end, a distal end and a first through hole extending from the proximal end to the distal end. The tubular body has an outer tubular surface and an inner tubular surface. The outer tubular surface and the inner tubular surface define an internal volume of the tubular body.

The first planar case portion comprises a second through hole and is provided at the proximal end of the tubular body of the casing. The second through hole is arranged to match the first through hole at the proximal end of the tubular body of the casing.

The second planar case portion comprises a third through hole and is provided at the distal end of the tubular body of the casing. The third through hole is arranged to match the first through hole at the distal end of the tubular body of the casing.

The first metallic conductor comprises a hollow tubular body. The first metallic conductor is provided coaxially within the internal volume of the tubular body of the casing so that it is provided adjacent to the outer tubular surface of the tubular body of the casing.

The second metallic conductor comprises a hollow tubular body. The second metallic conductor is provided coaxially within the internal volume of the tubular body of the casing so that it is provided adjacent to the inner tubular surface of the tubular body of the casing.

The first cell unit comprises a first cathode current collector, a first cathode, a first solid state electrolyte (SSE), optionally a first anode, and a first anode current collector. The first cathode current collector, the first cathode, the first solid state electrolyte (SSE), the optional first anode, and the first anode current collector all comprise or have a hollow tubular body (i.e. a tubular body with a through hole), and are provided coaxially within the internal volume of the tubular body of the casing.

The first cathode current collector is adjacent to the first or the second metallic conductor. The first cathode is adjacent to the first cathode current collector. The first SSE is adjacent to the first cathode. The optional anode is adjacent to the first SSE. The first anode current collector is adjacent to the anode - when present - or to the first SSE - when the first cell unit does not comprise an anode, and to the second or the first metallic conductor.

In other words, the first cell unit is provided within the volume of the tubular body of the casing defined by the first and second metallic conductors.

Advantageously, the first cathode has a length L0 and a thickness T0 and the first cathode current collector has a length L1 and a thickness T1, wherein L1 is equal to L0 + L2, L2 being higher than 0, wherein L2 is lower than T0. Alternatively or additionally, yet advantageously, L2 is equal to or lower than T1.

Advantageously, the first SSE has a length L3 and a thickness T3 and the first anode current collector has a length L4 and a thickness T4, wherein L4 is equal to L3 + L5, L5 being higher than 0, wherein L5 is lower than T3. Alternatively or additionally, yet advantageously, L5 is equal to or lower than T4.

Advantageously, the first SSE comprises or substantially consists of a dense layer. The term "dense layer" is used in the present disclosure for layers having a porosity lower than 40 %, preferably lower than 35 %, more preferably lower than 30 %, as measured by X-ray computed tomography.

When the all-solid battery does not comprise a first anode, the first SSE advantageously comprises a dense layer and a porous layer. Advantageously, the porous layer of the first SSE is adjacent to the first anode current collector, i.e. the porous layer of the first SSE is advantageously provided between the dense layer of the first SSE and the first anode current collector.

The term "porous layer" is used in the present disclosure for layers having a porosity equal to or higher than 40 %, preferably at least 45 %, such as at least 50 %, at least 55 %, more preferably at least 60 %, for example at least 65 %, at least 70 %, at least 75 %, or at least 80 %, as measured by X-ray computed tomography.

Advantageously, the first anode - when present - comprises or substantially consists of metallic lithium.

Advantageously, the first cathode current collector comprises or substantially consists of a conductive metal. Advantageously, the metallic conductor adjacent to the first cathode current collector comprises or substantially consists of the same conductive metal. Preferably, the first cathode current collector comprises or substantially consists of aluminium.

Advantageously, the first anode current collector comprises or substantially consists of a conductive metal. Advantageously, the metallic conductor adjacent to the first anode current collector comprises or substantially consists of the same conductive metal. Preferably, the first anode current collector comprises or substantially consists of copper.

Advantageously, the first metallic conductor, arranged or provided within the internal volume of the tubular body of the casing, comprises a first metal-comprising sheet adjacent to the outer tubular surface of the tubular body of the casing. Advantageously, the first metallic conductor further comprises a first metal-comprising mesh adjacent to the first metal-comprising sheet and adjacent to one of the cathode current collector and the anode current collector of the first cell unit. The first metal-comprising sheet and the first metal-comprising mesh comprise a hollow tubular body. Advantageously, the first sheet and/or the first mesh comprise or substantially consist of the metal comprised in the respective current collector adjacent to the first sheet.

Advantageously, the second metallic conductor, arranged or provided within the internal volume of the tubular body of the casing, comprises a second metal-comprising sheet adjacent to the inner tubular surface of the tubular body of the casing. Advantageously, the second metallic conductor further comprises a second metal-comprising mesh adjacent to the second metal-comprising sheet and adjacent to one of the anode current collector and the cathode current collector of the first cell unit. The second metal-comprising sheet and the second metal-comprising mesh comprise a hollow tubular body. Advantageously, the second sheet and/or the second mesh comprise or substantially consist of the metal comprised in the respective current collector adjacent to the second sheet.

Advantageously, when one or both of the metallic conductors comprises a sheet and a mesh, the current collector adjacent to the respective mesh is advantageously (mechanically) attached, i.e. connected or fixed, to the mesh.

Advantageously, the first metal-comprising sheet of the first metallic connector forms the outer tubular surface of the tubular body of the casing. Alternatively, yet advantageously, the first sheet can be attached, i.e. (mechanically) connected or fixed, to the outer tubular surface of the tubular body of the casing.

Advantageously, the second metal-comprising sheet of the second metallic connector forms the inner tubular surface of the tubular body of the casing. Alternatively, yet advantageously, the second sheet can be attached, i.e. (mechanically) connected or fixed, to the inner tubular surface of the tubular body of the casing.

Advantageously, the all-solid battery further comprises a second cell unit, wherein the first cell unit and the second cell unit form a first cell stack.

Advantageously, the second cell unit comprises optionally a second anode, a second SSE, a second cathode and a second cathode current collector. The second anode, the second SSE, the second cathode and the second cathode current collector all comprise or have a hollow tubular body (i.e. a tubular body with a through hole), and are provided coaxially within the internal volume of the tubular body of the casing.

The second anode is adjacent to the first anode current collector. In other words, the first and second cell units share the first anode current collector.

The second SSE is adjacent to the first anode current collector of the first cell unit, or, when the second cell unit comprises a second anode, to that second anode. The second cathode is adjacent to the second SSE. The second cathode current collector is adjacent to the second cathode. When the first cathode current collector is adjacent to the first metallic conductor, the second cathode current collector is advantageously adjacent to the second metallic conductor, and vice versa.

Advantageously, the all-solid battery comprises a plurality of cell stacks, i.e. two, three, four or more cell stacks, wherein the second cathode current collector of a stack and the first cathode current collector of an adjacent stack form a shared cathode current collector, i.e. adjacent stacks share a cathode current collector.

Advantages of the configuration (set-up, shape and build-up of the components) of the all-solid batteries of the present invention include an efficient integration and a maximum use of volumetric and gravimetric energy density of the battery in devices. The through-opening further allows for use of the batteries in devices that necessitate the presence of an opening in the battery for integration into the devices without requiring adapting the battery design, which is required for conventional batteries to circumvent the opening, which is usually accomplished by losing valuable active surface of the battery as the battery electrodes are designed having smaller surface areas compared to the surface area of the device surface into which the integration takes place. This in turn lowers the energy density of the battery.

Compared to prior art batteries with a through opening, the present all-solid batteries are less complex and maximize their potential. More particularly, the present batteries are easy to assemble, as all components (electrodes, SSE) can be shaped beforehand to have a tubular body with a through opening (also called a ring-like structure) and having dimensions that allow a simple assembly of just placing the components in the right order in the tubular body of the casing. This is contrary to prior art batteries with a through opening, which typically require winding the electrodes, and need insulators to prevent short circuiting during assembly.

### Description of the figures

Aspects of the invention will now be described in more detail with reference to the appended drawings, wherein same reference numerals illustrate same features and wherein:
- Figure 1 schematically shows an all-solid battery of the invention;
- Figure 2A and 2B show a cross-section of the battery of Figure 1, schematically showing cell units of the invention;
- Figure 3 shows a further cross-section of a battery of the invention, schematically showing a cell stack comprising two cell units according to Figure 2A;
- Figure 4 shows a further cross-section of a battery of the invention, schematically showing two cell stacks;
- Figures 5, 6A and 6B show schematical and detailed views of different portions of the cell unit of a battery of the invention.

### Detailed description of the invention

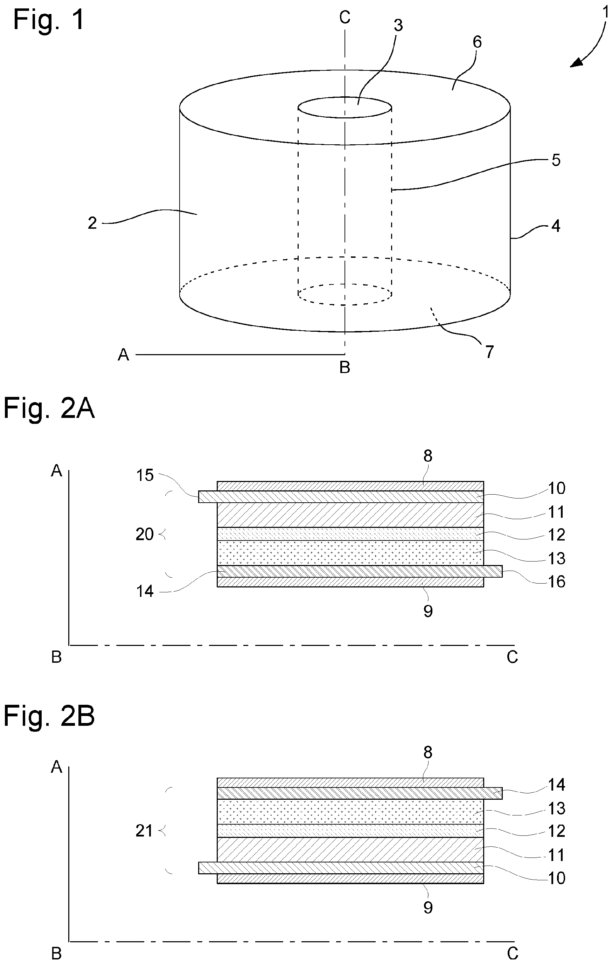

Fig. 1 schematically shows an all-solid battery 1 of the present invention. All-solid batteries according to the present invention are advantageously secondary batteries, for example Li-ion batteries or Na-ion batteries.

The all-solid battery 1 comprises a casing 2. The casing 2 has a tubular body having a through hole 3, wherein the tubular body has an outer tubular surface 4 and an inner tubular surface 5, the latter being defined by the through hole 3. The outer tubular surface 4 and the inner tubular surface 5 define the internal volume of the tubular body of the casing.

The casing 2 further comprises a first planar case portion 6 at a proximal end of the tubular body, and a second planar case portion 7 at a distal end of the tubular body. The through opening of the first 6 and second 6 planar case portions matches the through opening comprised within the tubular body. The first 6 and second 7 planar case portions can be made of any material known in the art, including polymers and metal. Advantageously, but not necessary, they comprise or substantially consist of a metal.

The through opening as shown has a circular cross-section. The cross-section of the through hole or through opening is not limited to a circular shape, but can also have an ellipsoidal shape, or a polygonal shape. The polygonal shape can be a regular polygon or an irregular polygon. For example, the polygonal shape can have three corners (triangular shape), four corners (e.g. square or rectangular, without being limited thereto), five corners, and so on. Advantageously, the cross-section is circular or ellipsoidal, since the inventors have found that hollow tubular bodies having such as cross-section are the easiest and cheapest to produce.

Fig. 2A shows a cross-section along the line A-B of Fig. 1, wherein the positive end of the battery is positioned at the outer tubular surface 4 and the negative end of the battery is positioned at the inner tubular surface 5.

The all-solid battery comprises a first metallic conductor 8, a second metallic conductor 9 and a first cell unit 20 provided between the first 8 and second 9 metallic conductors, wherein all have a hollow tubular body and are provided within the internal volume of the tubular body of the casing. The first metallic conductor 8 is adjacent to the outer tubular surface 4. The second metallic conductor 9 is adjacent to the inner tubular surface 5.

Advantageously, one or both of the first 8 and second 9 metallic conductors comprise(s) a metal-comprising (i.e. metallic) sheet (not shown). Alternatively or additionally, yet advantageously, one or both of the first 8 and second 9 metallic conductors comprise(s) a metallic mesh (not shown).

Advantageously, when the first 8 and/or the second 9 metallic conductor comprise(s) a metal-comprising sheet or a metallic mesh, the metal-comprising sheet or mesh is provided (positioned) adjacent to the respective tubular surface 4, 5 of the tubular body of the casing 2.

Advantageously, when the first 8 and/or the second 9 metallic conductor comprise(s) a metal-comprising sheet and a metallic mesh, the metal-comprising sheet is positioned (provided) adjacent to the respective tubular surface 4, 5 of the tubular body of the casing 2, and the metallic mesh is positioned at the surface of the metallic sheet opposite to the surface thereof adjacent to the respective tubular surface 4, 5. In other words, the metallic meshes of the metallic conductors 8,9 advantageously are adjacent to the first cell unit 20 of the all-solid battery. The metallic sheet and the metallic mesh of a metallic conductor are advantageously (mechanically) connected to one another.

The metallic sheet or the metallic mesh of the first 8 metallic conductor, whichever is positioned adjacent to the outer tubular surface 4 of the tubular body of the casing 2, is mechanically connected (fixed, attached) to the outer 4 tubular surface of the tubular body of the casing 2. Alternatively (not shown), the metal-comprising sheet or the metallic mesh of the first 8 metallic conductor forms the outer 4 tubular surface of the tubular body of the casing 2.

The metallic sheet or the metallic mesh of the second 9 metallic conductor, whichever is positioned adjacent to the inner tubular surface 5 of the tubular body of the casing 2, is mechanically connected (fixed, attached) to the inner 5 tubular surface of the tubular body of the casing 2. Alternatively (not shown), the metal-comprising sheet or the metallic mesh of the second 9 metallic conductor forms the inner 5 tubular surface of the tubular body of the casing 2.

The first cell unit 20 comprises a cathode current collector 10 adjacent to the first metallic conductor 8, for example (not shown) adjacent to the metallic mesh of the first metallic conductor 8. The cathode current collector 10 can be any cathode current collector known in the art, for example an aluminium foil. Advantageously, the first metallic conductor 8 comprises or substantially consists of the same metal as the cathode current collector 10, for example they can both be made of aluminium.

Advantageously, the cathode current collector 10 is attached, i.e. (mechanically) connected, to the first metallic conductor 8. When the latter comprises a metal-comprising sheet and a metal-comprising mesh, the cathode current collector 10 is advantageously attached to the mesh.

More particularly and advantageously, the cathode current collector 10 is attached to the first metallic conductor 8 via its cathode terminal 15. Techniques known in the art for connecting can be used, such as pressure welding, laser welding or ultrasonic welding.

The first cell unit 20 further comprises a cathode 11. The cathode can be any cathode known in the art. The cathode 11 is adjacent to the cathode current collector 10. Non-limiting examples of cathodes include cathodes comprising NMC or LFP as active material.

The first cell unit 20 further comprises a solid state electrolyte 12 adjacent to the cathode 11. The solid electrolyte can be any SSE known in the art, in particular ceramic SSEs.

A particular example of a suitable ceramic SSE, particularly suited for Li-ion all-solid batteries, is a SSE comprising or substantially consisting of a lithium garnet-type material such as Li₇La₃Zr₂O₁₂ (lithium lanthanum zirconium oxide, abbreviated as LLZO). Optionally, LLZO can be doped, as is known in the field. Dopants can comprise one or more of aluminium (Al), gallium (Ga), neodymium (Nd), strontium (Sr), chromium (Cr), titanium (Ti), tantalum (Ta), tellurium (Te), niobium (Nb), or tungsten (W).

A further example of a suitable ceramic SSE is a SSE comprising or substantially consisting of Li_{1.3}Al_{0.3}Ti_{1.7}(PO₄)₃ (lithium aluminium titanium phosphate, abbreviated as LATP, CAS number 120479-61-0).

Further non-limiting examples of suitable SSEs, in particular for Na-ion all solid batteries, include: AₓB_{y}C_{z}(PO₄)ₙ wherein A is a monovalent cation and B is either a divalent ion or a tetravalent ion, C is a tetra valent ion, and x, y, z and n, individually, are integers greater than 0. An example of such a compound is NaₓZr_{y}Si_{z}(PO₄)ₙ, i.e. wherein A is Na, B is Zr, C is Si.

The all-solid battery can be an anode-comprising battery or can be anode-free. When the battery comprises an anode, the first cell unit 20 comprises an anode 13 adjacent to the SSE 12, which can be any anode known in the art for SSBs. For example, the anode 13 can comprise or substantially consist of metallic lithium, graphite and/or silicon.

When the all-solid battery is an anode-free battery, the battery and thus the first cell unit 20 does not comprise an anode (not shown).

The first cell unit further comprises an anode current collector 14 having an anode terminal 16. The anode current collector 14 can be any anode current collector known in the art, for example a copper foil.

For anode-comprising batteries, the anode current collector 14 is adjacent to the anode 13. For anode-free batteries, the anode current collector 14 is adjacent to the SSE 12.

The anode current collector 14 of the first cell unit 20 is adjacent to the second metallic conductor 9, for example (without being limitative) to the metallic mesh of the second metallic conductor 9 when the latter comprises a metallic mesh and a metallic sheet as described hereinabove. Advantageously, the second metallic conductor 9 comprises or substantially consists of the same metal as the anode current collector 14, for example they can both be made of copper.

Advantageously, the anode current collector 14 is attached, i.e. (mechanically) connected, to the second metallic conductor 9. When the latter comprises a sheet and a mesh, the anode current collector 14 is advantageously attached to the mesh.

More particularly and advantageously, the anode current collector 14 is attached to the second metallic conductor 9 via its anode terminal 16. Techniques known in the art for connecting can be used, such as pressure welding, laser welding or ultrasonic welding.

The inventors have surprisingly discovered that by using a metallic conductor 8, 9 comprising a metallic sheet and a metallic mesh as described hereinabove, wherein the sheet and the mesh are mechanically connected to one another, the connection of the electrode terminal 15, 16 of the current collector 10, 14 to the respective (adjacent) metallic conductor 8, 9 becomes easier and can be better controlled because both the terminal and the mesh have a certain flexibility when compared to a sheet. This leads to a more secure connection having a higher quality, thereby improving the performance of the battery and reducing the risk for damage due to short circuiting.

Advantageously, the SSE 12 comprises a dense layer, or is substantially dense throughout its entire structure.

The SSE 12 can be a multilayer SSE, i.e. a SSE having at least two layers, such as three, four, five, or more layers. The multilayer solid state electrolyte advantageously comprises alternating dense layers and porous layers. For example, when the number of layers is two, the multilayer SSE comprises a dense layer adjacent to a porous layer. For example, when the number of layers is three, the multilayer SSE can comprise a sequence of a dense layer, a porous layer, and a dense layer, or a sequence of a porous layer, a dense layer, and a porous layer.

Advantageously, when the first cell unit 20 does not comprise an anode (anode-free battery), the SSE 12 comprises a dense layer and a porous layer. Advantageously, the porous layer of the SSE is provided between the dense layer and the anode current collector 14, i.e. the porous layer advantageously is adjacent to the anode current collector 14.

Fig. 2B shows a further cross-section along the line A-B of Fig. 1, wherein the first cell unit 21 comprises the same components are hereinabove described for the first cell unit 20 of Fig. 2A, but with the difference that the positive end of the battery is positioned at the inner tubular surface 5 and the negative end of the battery is positioned at the outer tubular surface 4. In other words, the cathode current collector 10 is now adjacent to the second metallic conductor 9 and the anode current collector 14 is now adjacent to the first metallic conductor 8.

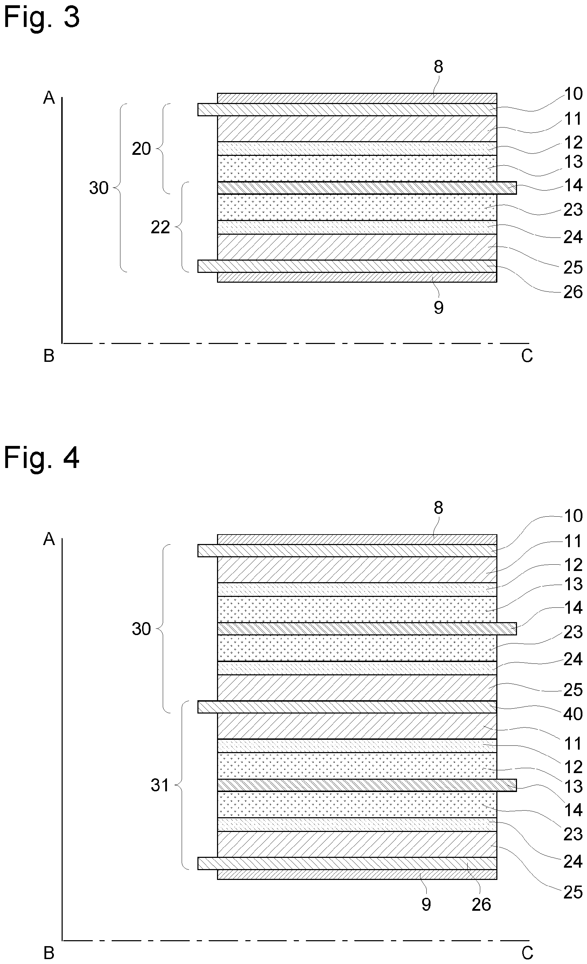

Fig. 3 discloses a further cross-section of an all-solid battery of the invention. The all-solid battery comprises the first cell unit 20 of Fig. 2A, and further comprises a second cell unit 22 which is provided coaxially within the internal volume of the tubular body of the casing 2. The first 20 and second 22 cell units share the anode current collector 14 of the first cell unit 20. The first 20 and second 22 cell units form together a cell stack 30.

The second cell unit 20 comprises in addition to the shared anode current collector 14 also optionally an anode 23, a SSE 24, a cathode 25 and a cathode current collector 26. All these components 23, 24, 25, 26 comprise a hollow tubular body. The anode 23, when present, is adjacent to the shared anode current collector 14. The SSE 24 is adjacent to the anode 23, when present, or to the share anode current collector 14 when no anode 23 is present. The cathode 25 is adjacent to the SSE 24. The cathode current collector 26 is adjacent to the cathode 25. The cathode current collector 26 is further also adjacent to the second metallic conductor 9.

The optional anode 23, the SSE 24, the cathode 25 and the cathode current collector 26 are advantageously as hereinabove described for the optional anode 13, the SSE 12, the cathode 11 and the cathode current collector 10 of the first cell unit 20 of Fig. 2A.

Advantageously, both cathode current collectors 10, 26 are attached, i.e. (mechanically) connected, to the first metallic conductor 8, advantageously via their cathode terminals. When the first metallic conductor 8 comprises a metal-comprising sheet and a metal-comprising mesh, the cathode current collectors 10, 26 are advantageously attached to the mesh.

Advantageously, both anode current collectors 14 are attached, i.e. (mechanically) connected, to the second metallic conductor 9, advantageously via their anode terminals. When the second metallic conductor 9 comprises a metal-comprising sheet and a metal-comprising mesh, the anode current collectors 14 are advantageously attached to the mesh.

Fig. 4 shows a further cross-section of an all-solid battery of the invention. The all-solid battery comprises two cell stacks 30, 31, which are advantageously as hereinabove described in Fig. 3. The cell stacks 30, 31 share the cathode current collector of the first stack 30, i.e. a shared cathode current collector 40.

Advantageously, all cathode current collectors 10, 26, 40 are attached, i.e. (mechanically) connected, to the first metallic conductor 8, advantageously via their cathode terminals. When the first metallic conductor 8 comprises a metal-comprising sheet and a metal-comprising mesh, the cathode current collectors 10, 26, 40 are advantageously attached to the mesh.

Advantageously, both anode current collectors 14 are attached, i.e. (mechanically) connected, to the second metallic conductor 9, advantageously via their anode terminals. When the second metallic conductor 9 comprises a metal-comprising sheet and a metal-comprising mesh, the anode current collectors 14 are advantageously attached to the mesh.

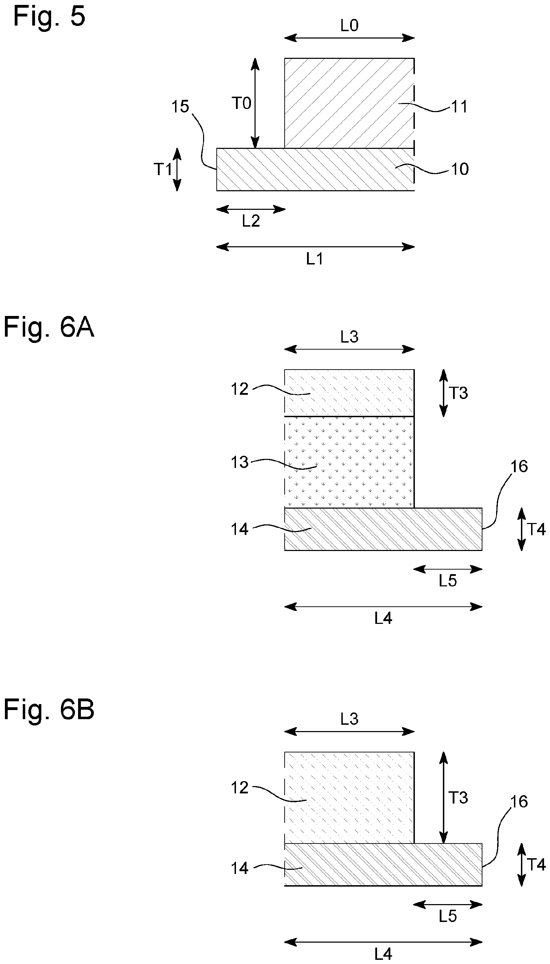

Fig. 5 shows a detail of the cross-section of Fig. 2B, in particular the cathode 11 and the cathode current collector 10. The cathode current collector 10 has a length L1, which is equal to L0 + L2, wherein L0 is the length of the cathode 11 and L2 the length of the cathode terminal 15. L2 is higher than 0, advantageously equal to or higher than 10 µm, preferably equal to or higher than 20 µm, more preferably equal to or higher than 30 µm, for example between 30 µm and 50 µm.

The cathode 11 has a thickness T0 and the cathode current collector 10 has a thickness T1, wherein advantageously T0 > T1, i.e. the cathode 11 is thicker than the cathode current collector 10. Advantageously, T0 is between 30 µm and 100 µm, preferably between 40 µm and 90 µm, more preferably between 50 µm and 80 µm. Advantageously, T1 is between 5 µm and 40 µm, preferably between 10 µm and 30 µm, more preferably between 15 µm and 30 µm, for example 20 µm.

Advantageously, L2 < T0 so that the cathode current collector 10 does not touch any one of the SSE 12 adjacent to the cathode 11, the optional anode 13 and the anode current collector 14 upon bending the cathode current collector 10, thereby reducing the risk for short circuiting.

Alternatively or additionally, yet advantageously, L2 ≤ T1 so that upon bending of the cathode current collector 10, the cathode terminal 15 will always touch a planar portion of the casing at that side of the casing (not shown in Fig. 5), in the case of Fig. 5 in combination with Fig. 2B and Fig. 1 the second planar portion 7 of the tubular body of the casing 2.

The cathode current collector 10 is typically bent upon assembly of the all-solid battery 1, in particular upon closing the casing 2.

Fig. 6A shows a detail of the cross-section of Fig. 2A for a battery comprising an anode, the detail showing the SSE 12, the anode 13 and the anode current collector 14. Since there is an anode 13, the SSE 12 is advantageously a dense SSE. The SSE 12 has a length L3. Advantageously, the anode 13 has the same length L3 as the SSE 12. Advantageously, in view of Fig. 6A together with Figs. 2A and 5, the length L3 of the SSE and thus advantageously the length of the anode 13 is advantageously substantially equal to or larger than the length L0 of the cathode 11. The anode current collector 14 has a length L4, and its anode terminal 16 has a length L5. L4 is equal to L3 + L5, wherein L5 is higher than 0. The SSE 12 has a thickness T3 and the anode current collector has a thickness T4. Advantageously, T4 is between 2 µm and 25 µm, preferably between 5 µm and 20 µm, more preferably between 7 µm and 15 µm, for example 10 µm.

Advantageously, the SSE comprises a dense layer and/or a porous layer. Advantageously, the dense layer has a thickness between 25 µm and 75 µm, preferably between 30 µm and 70 µm, more preferably between 40 µm and 60 µm, for example 50 µm. Advantageously, the porous layer has a thickness between 5 µm and 50 µm, preferably between 10 µm and 40 µm, more preferably between 20 µm and 30 µm, for example 25 µm.

Advantageously, L5 < T3 so that the anode current collector 14 does not touch any one of the cathode 11 and the cathode current collector 10 upon bending the anode current collector 14, thereby reducing the risk for short circuiting.

Alternatively or additionally, yet advantageously, L5 ≤ T4 so that upon bending of the anode current collector 14, the anode terminal 16 will always touch a planar portion of the casing at that side of the casing (not shown in Fig. 6A), in the case of Fig. 6A in combination with Fig. 2A and Fig. 1 the first planar portion 6 of the tubular body of the casing 2.

The anode current collector 14 is typically bent upon assembly of the all-solid battery 1, in particular upon closing the casing 2.

Advantageously, the anode has a thickness between 10 µm and 70 µm, preferably between 20 µm and 60 µm, more preferably between 30 µm and 50 µm.

Fig. 6B shows the same as Fig. 6A but for an anode-free battery, i.e. for the cross-section of Fig. 2A which does not comprise an anode 13, and which comprises a SSE 12 and an anode current collector 14. The SSE 12 has a length L3. Advantageously, in view of Fig. 6A together with Figs. 2A and 5, the length L3 of the SSE is advantageously substantially equal to the length L0 of the cathode 11. The anode current collector 14 has a length L4, and its terminal 16 has a length L5. L4 is equal to L3 + L5, wherein L5 is higher than 0.

The SSE 12 can be a dense SSE, such as LLZO, but can also comprise a dense layer and a porous layer, wherein the porous layer is advantageously contacting the anode current collector 14. The SSE 12 has a thickness T3. When the SSE 12 is a dense SSE, the thickness T3 is advantageously between 10 µm and 60 µm, preferably between 20 µm and 50 µm, more preferably between 30 µm and 40 µm. When the SSE 12 comprises a dense layer and a porous layer, the thickness T3 is advantageously between 5 µm and 150 µm, preferably between 10 µm and 100 µm.

Advantageously, L5 < T3 so that the anode current collector 14 does not touch any one of the cathode 11 and the cathode current collector 10 upon bending the anode current collector 14, thereby reducing the risk for short circuiting.

Alternatively or additionally, yet advantageously, L5 ≤ T4 so that upon bending of the anode current collector 14, the anode terminal 16 will always touch a planar portion of the casing at that side of the casing (not shown in Fig. 6B).

The all-solid batteries of the present disclosure are particularly suited for use in watches.

### Examples

A circular coin cell was prepared, thus having a first and a second planar case portion which are circular of shape and a tubular body having a circular cross-section, wherein the through holes of the planar case portions and of the tubular body also have a circular cross-section. More particularly, the first and second planar case portions had a diameter of 24 mm. The length of the tubular body, measured from its proximal end to its distal end, was 5 mm. The diameter of the through openings was between 5 and 10 mm.

The battery cell had a cross-section according to Fig. 4, wherein the anode was a 50 µm thick Li-metal sheet on a 10 µm thick copper sheet as anode current collector. The SSE was 50 µm thick dense LLZO. The cathode was 80 µm thick and comprised LFP as active material, and the cathode current collector was a 20 µm thick aluminium sheet.

All components had the shape of a tubular body with a circular cross-section, the diameter of the cross-sections being between 15 mm and 20 mm with a through opening having a diameter between 7 mm and 15 mm, to fit into the internal volume of the tubular body.

An aluminium mesh or sheet having also a circular cross-section was used as the first metallic conductor and was laser welded to all cathode terminals to secure the cathode terminals (also called Al - Tabs) and was connected to one of the planar case portions of the casing.

A copper sheet having a circular cross-section was used as the second metallic conductor and was welded to all anode terminals (Copper Tabs) and connected to the other planar case portion of the casing.

Welding was carried out using a conventional technique, e.g. pressure welding, laser welding or ultrasonic welding.. The two poles of the battery were thus located at the outer walls of the coin cell that has a shape of a doughnut.

A second battery was also prepared, now without the anode of the first battery. All other components remained the same, i.e. the SSE was a 50 µm thick dense layer of LLZO. A third battery was also prepared, without the anode of the first battery, and with a SSE comprising a 50 µm thick dense layer and a 25 µm thick porous layer.

### Nomenclature

- 1.: all-solid battery
- 2.: casing
- 3.: through hole
- 4.: outer tubular surface
- 5.: inner tubular surface
- 6.: first planar case portion
- 7.: second planar case portion
- 8.: first metallic conductor
- 9.: second metallic conductor
- 10.: first cathode current collector
- 11.: first cathode
- 12.: first solid state electrolyte
- 13.: first anode
- 14.: first anode current collector
- 15.: cathode terminal
- 16.: anode terminal
- 20.: first cell unit
- 21.: first cell unit
- 22.: second cell unit
- 23.: second anode
- 24.: second solid state battery
- 25.: second cathode
- 25.: second cathode current collector
- 30.: first cell stack
- 31.: adjacent (second) cell stack
- 40.: shared cathode current collector

## Claims

1. An all-solid battery (1) comprising:
- a casing (2) comprising:
▪ a tubular body comprising a proximal end, a distal end and a first through hole (3) extending from the proximal end to the distal end, further comprising an outer tubular surface (4) and an inner tubular surface (5), wherein the outer tubular surface (4) and the inner tubular surface (5) define an internal volume of the tubular body,
▪ a first planar case portion (6) at the proximal end of the tubular body, and comprising a second through hole arranged to match the first through hole (3) at the proximal end thereof, and
▪ a second planar case portion (7) at the distal end of the tubular body and comprising a third through hole arranged to match the first through hole (3) at the distal end thereof,
- a first metallic conductor (8) comprising a hollow tubular body and provided coaxially within the internal volume of the tubular body of the casing (2) and provided adjacent to the outer tubular surface (4) of the tubular body of the casing (2),
- a second metallic conductor (9) comprising a hollow tubular body and provided coaxially within the internal volume of the tubular body of the casing (2) and provided adjacent to the inner tubular surface (5) of the tubular body of the casing (2),
- a first cell unit (20, 21) comprising:
▪ a first cathode current collector (10) adjacent to the first (8) or the second (9) metallic conductor,
▪ a first cathode (11) adjacent to the cathode current collector (10),
▪ a first solid state electrolyte (SSE) (12) adjacent to the first cathode (11),
▪ optionally a first anode (13) adjacent to the first SSE (12), and
▪ a first anode current collector (14) adjacent to the first SSE (12) or, when the first cell unit (20, 21) comprises a first anode (13), adjacent to the first anode (13), and adjacent to the second (9) or the first (8) metallic conductor,
**characterized in that** each component (10, 11, 12, 13, 14) of the first cell unit (20, 21) comprises a hollow tubular body and is provided coaxially within the internal volume of the tubular body of the casing (2).

2. The all-solid battery (1) according to claim 1, wherein the first cathode (11) has a length L0 and a thickness T0, wherein the first cathode current collector (10) has a length L1 and a thickness T1, wherein L1 is equal to L0 + L2, L2 being higher than 0, wherein L2 is lower than T0 and/or wherein L2 is equal to or lower than T1.

3. The all-solid battery (1) according to any one of the preceding claims, wherein the first SSE (12) has a length L3 and a thickness T3, wherein the first anode current collector (14) has a length L4 and a thickness T4, wherein L4 is equal to L3 + L5, L5 being higher than 0, wherein L5 is lower than T3 and/or wherein L5 is equal to or lower than T4.

4. The all-solid battery (1) according to any one of the preceding claims, wherein the first SSE (12) comprises a dense layer having a porosity lower than 40 %, as measured by X-ray computed tomography.

5. The all-solid battery (1) according to claim 4, wherein the all-solid battery (1) does not comprise a first anode (13) and wherein the first SSE (12) further comprises a porous layer adjacent to the first anode current collector (14), wherein the porous layer has a porosity equal to or higher than 40 %, as measured by X-ray computed tomography.

6. The all-solid battery (1) according to any one of the preceding claims, the all-solid battery (1) comprising a first anode (13), wherein the first anode (13) comprises metallic lithium.

7. The all-solid battery (1) according to any one of the preceding claims, wherein the first cathode current collector (10) and the first anode current collector (14), individually, comprise a conductive metal, and wherein the first metallic conductor (8) and the second metallic conductor (9) comprise the same metal as the current collector (10, 14) adjacent to the respective metallic conductor (8, 9).

8. The all-solid battery (1) according to any one of the preceding claims, wherein the cathode current collector (10) comprises aluminium.

9. The all-solid battery (1) according to any one of the preceding claims, wherein the anode current collector (14) comprises copper.

10. The all-solid battery (1) according to any one of the preceding claims, wherein the first metallic conductor (8) comprises:
- a first metal-comprising sheet adjacent to the outer tubular surface (4) of the tubular body of the casing (2), and
- a first metal-comprising mesh adjacent to the first metal-comprising sheet and adjacent to the first cathode current collector (10) or the first anode current collector (14),
- wherein the first metal-comprising sheet and the first metal-comprising mesh comprise a hollow tubular body.

11. The all-solid battery (1) according to any one of the preceding claims, wherein the second metallic conductor (9) comprises:
- a second metal-comprising sheet adjacent to the inner tubular surface (5) of the tubular body of the casing (2), and
- a second metal-comprising mesh adjacent to the second metal-comprising sheet and adjacent to the first anode current collector (14) or the first cathode current collector (10),
- wherein the second metal-comprising sheet and the second metal-comprising mesh comprise a hollow tubular body.

12. The all-solid battery (1) according to any one of claims 10 to 11, wherein one or both of the cathode current collector (10) and the anode current collector (14) is attached to the metal-comprising mesh of the metallic conductor (8, 9) adjacent to the respective current collector (10, 14).

13. The all-solid battery (1) according to any one of claims 10 to 12, wherein the metal-comprising sheet of the first metallic connector (8) forms the outer tubular surface (4) of the tubular body of the casing (2), and/or wherein the metal-comprising sheet of the second metallic connector (9) forms the inner tubular surface (5) of the tubular body of the casing (2).

14. The all-solid battery (1) according to any one of the preceding claims, further comprising a second cell unit (22) comprising:
- optionally a second anode (23) adjacent to the first anode current collector (14) of the first cell unit (20, 21),
- a second SSE (24) adjacent to the first anode current collector (14) of the first cell unit (20, 21), or, when the second cell unit (22) comprises a second anode (23), to the second anode (23),
- a second cathode (25) adjacent to the second SSE (24), and
- a second cathode current collector (26) adjacent to the second cathode (25),
wherein each component (23, 24, 25, 26) of the second cell unit (22) comprises a hollow tubular body and is provided coaxially within the internal volume of the tubular body of the casing (2), wherein the first (20, 21) and the second (22) cell units share the first anode current collector (14), and wherein the first (20, 21) and the second (22) cell units form a first cell stack (30).

15. The all-solid battery (1) according to claim 14, comprising a plurality of cell stacks (30, 31), wherein the second cathode current collector (26) of one stack (30) and the first cathode current collector (10) of an adjacent stack (31) form a shared cathode current collector (40).
